# EUROPÄISCHE PATENTSCHRIFT

(11) **EP 3 109 424 B1**
(45) Veröffentlichungstag und Bekanntmachung des Hinweises auf die Patenterteilung: **15.08.2018**
(21) Anmeldenummer: 16001326.4
(22) Anmeldetag: 13.06.2016
(51) Int. Cl.: F01N 3/20

(54) **REDUKTIONSMITTELTANK MIT INTEGRIERTEM FLUIDKANAL ZUM FÜHREN EINES HEIZFLUIDES**
REDUCING AGENT TANK WITH INTEGRATED FLUID CHANNEL FOR GUIDING A HEATING FLUID
RÉSERVOIR DE MOYEN DE RÉDUCTION AVEC CANAL DE FLUIDE INTÉGRÉ POUR LA CONDUITE D'UN FLUIDE CHAUD

(30) Priorität: 27.06.2015 DE 102015008351
(43) Veröffentlichungstag der Anmeldung: 28.12.2016
(73) Patentinhaber: MAN Truck & Bus AG, 80995 München (DE)
(72) Erfinder: Mischke, Marco, 85368 Moosburg (DE); Teubner, Daniel, 85304 Ilmmünster (DE); Afkhami, Amir-Reza, 80803 München (DE)
(74) Vertreter: v. Bezold & Partner Patentanwälte - PartG mbB

(56) Entgegenhaltungen:
- EP-A1- 2 733 321
- DE-A1-102010 029 269
- DE-A1-102012 020 040
- DE-U1- 20 314 557
- DE-U1-202005 019 499

## Beschreibung

Die Erfindung betrifft einen Reduktionsmitteltank für ein Reduktionsmittel und zweckmäßig zur Montage an ein Kraftfahrzeug, insbesondere einen Harnstofftank für eine wässrige Harnstofflösung.

Kraftfahrzeug-Reduktionsmitteltanks zur Aufnahme eines Reduktionsmittels sind im Stand der Technik in den unterschiedlichsten Ausführungsformen bekannt. So offenbart z. B. DE 10 2011 108 213 A1 einen beheizbaren Reduktionsmitteltank, der über elektrische Heizelemente beheizbar ist und dessen Reduktionsmittel über ein Tank-externes Fördermodul befördert werden kann. Ferner ist zum Stand der Technik hinzuweisen auf die DE 10 2012 020040 A1, die DE 203 14 557 U1, die DE 20 2005 019499 U1, die DE 10 2010 029269 A1 und die EP 2 733 321 A1.

Eine Aufgabe der Erfindung ist es, einen alternativen und/oder verbesserten Reduktionsmitteltank für ein Reduktionsmittel zu schaffen.

Diese Aufgabe wird mit den Merkmalen des Hauptanspruchs gelöst. Vorteilhafte Weiterbildungen der Erfindung können den Unteransprüchen und der folgenden Beschreibung bevorzugter Ausführungsformen der Erfindung entnommen werden.

Die Erfindung schafft einen Reduktionsmitteltank für ein Reduktionsmittel, vorzugsweise einen Harnstofftank zur Aufnahme einer wässrigen Harnstofflösung, z. B. eines Harnstoff-Wasser-Gemischs.

Der Reduktionsmitteltank dient zweckmäßig zur Montage an ein Kraftfahrzeug, vorzugsweise Nutzfahrzeug, insbesondere Lastkraftwagen oder Omnibus.

Das Reduktionsmittel dient insbesondere zur Versorgung eines Abgasreinigungssystems, z. B. eines auf Basis der katalytischen Reduktion arbeitenden Abgasreinigungssystems.

Der Reduktionsmitteltank umfasst ein Gehäuse zur Aufnahme des Reduktionsmittels, ein Tanksegment und vorzugsweise ein Fördermodul, z. B. eine Pumpe, zum Fördern des Reduktionsmittels.

Das Tanksegment zeichnet sich insbesondere dadurch aus, dass es zumindest einen integrierten, insbesondere an- oder eingeformten, Fluidkanal zum Führen eines Fluides zum Erwärmen, insbesondere zum Heizen, des Reduktionsmittels aufweist, vorzugsweise so, dass das Tanksegment selbst den Fluidkanal ausbildet. Der Fluidkanal ist somit vorzugsweise einstückig-integraler Teil des Tanksegments.
Der Fluidkanal ist somit insbesondere kein zum Tanksegment separates Rohr oder Schlauch.
Das Tanksegment wird, zweckmäßig in seiner Herstellung bzw. herstellungsbedingt, vorzugsweise so ausgeführt, dass der Fluidkanal mit integriert wird, insbesondere mit ausgeformt wird, z. B. ein- oder angeformt wird.
Ein und dasselbe Formteil bildet das Tanksegment und den Fluidkanal aus.

Das Tanksegment und/oder das Formteil sind ein Spritzgussteil und somit zweckmäßig aus einem Kunststoffmaterial gefertigt.
Der Fluidkanal ist zweckmäßig auf der Innenseite des Tanksegments ausgebildet.
Es ist möglich, dass das Tanksegment das Fördermodul aufweist und somit zweckmäßig das Fördermodul in das Tanksegment integriert ist. Hierzu kann das Tanksegment insbesondere eine Aufnahmeöffnung für das Fördermodul aufweisen.
Es ist möglich, dass ein Fluidkanal zumindest abschnittsweise im Wesentlichen bogenförmig, insbesondere im Wesentlichen kreisbogenförmig um die Aufnahmeöffnung für das Fördermodul bzw. das Fördermodul verläuft. Alternativ oder ergänzend kann ein Fluidkanal zumindest abschnittsweise mäanderförmig verlaufen.
Das Tanksegment umfasst vorzugsweise eine im Wesentlichen hauben- und/oder flächenförmige Wandung, um ein vorzugsweise hauben- und/oder flächenförmiges Bauteil zu schaffen. Die Wandung dient vorzugsweise als untere Abschlussabdeckung für das Gehäuse.

Das Tanksegment bildet zweckmäßig eine Begrenzungsstruktur für den Fluidkanal, die den Fluidkanal entlang seiner Längserstreckung begrenzt.

Die Begrenzungsstruktur umfasst zumindest zwei im Wesentlichen parallel verlaufende, z. B. rippenförmige Wandelemente und einen innenseitigen Teil der hauben- und/oder flächenförmigen Wandung.

Der Fluidkanal wird somit vorzugsweise durch im Wesentlichen parallel verlaufende Wandelemente und einen Teil der hauben- und/oder flächenförmigen Wandung begrenzt.

Es ist möglich, dass das Tanksegment und/oder die Begrenzungsstruktur den Fluidkanal zu einer Seite hin offen lässt und die Seite und somit der Fluidkanal durch ein benachbartes Tankelement geschlossen wird.

Vorzugsweise lässt das Tanksegment den Fluidkanal zur Oberseite hin offen, wobei die Oberseite und somit der Fluidkanal durch ein aufgesetztes Tankelement, insbesondere ein Bodensegment, z. B. eine Bodenplatte, des Gehäuses geschlossen wird.

Das Tanksegment ist vorzugsweise unter einem Bodensegment des Gehäuses angeordnet. Das Tanksegment dient insbesondere als Bodenheizung für das Gehäuse.

Das Tanksegment kann einen Fluidkanal-Einlass und/oder einen Fluidkanal-Auslass aufweisen.

Der Fluidkanal dient vorzugsweise zur Verbindung mit einem Kühlkreislauf einer Verbrennungskraftmaschine des Kraftfahrzeugs. Hierzu kann das Tanksegment z. B. einen Fluidkanal-Einlass und/oder einen Fluidkanal-Auslass aufweisen.

Der Fluidkanal ist vorzugsweise ein Heizkanal.

Das Tanksegment kann ferner mehrere Versteifungsrippen aufweisen, insbesondere zur Aussteifung und somit zweckmäßigen Verstärkung der hauben- und/oder flächenförmigen Wandung.

Die Erfindung ist nicht auf einen Reduktionsmitteltank begrenzt, sondern umfasst auch ein Tanksegment wie hierin offenbart.

Des Weiteren umfasst die Erfindung ein Kraftfahrzeug, vorzugsweise ein Nutzfahrzeug, insbesondere einen Omnibus oder einen Lastkraftwagen, mit einem Reduktionsmitteltank wie hierin offenbart.

Das Kraftfahrzeug umfasst vorzugsweise ein Abgasnachbehandlungssystem, das mit dem Reduktionsmittel aus dem Reduktionsmitteltank versorgt werden kann.

Die zuvor beschriebenen bevorzugten Ausführungsformen und Merkmale der Erfindung sind miteinander kombinierbar. Andere vorteilhafte Weiterbildungen sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht eines Reduktionsmitteltanks gemäß einer Ausführungsform der Erfindung,
- Figur 2: zeigt eine andere perspektivische Ansicht des Reduktionsmitteltanks der Figur 1 mit einer illustrativen Weglassung, so dass zu Illustrationszwecken in den Reduktionsmitteltank hineingeschaut werden kann,
- Figur 3: zeigt eine perspektivische Ansicht eines Tanksegments gemäß einer Ausführungsform der Erfindung, und
- Figur 4: zeigt eine andere perspektivische Ansicht des Tanksegments der Figur 3.

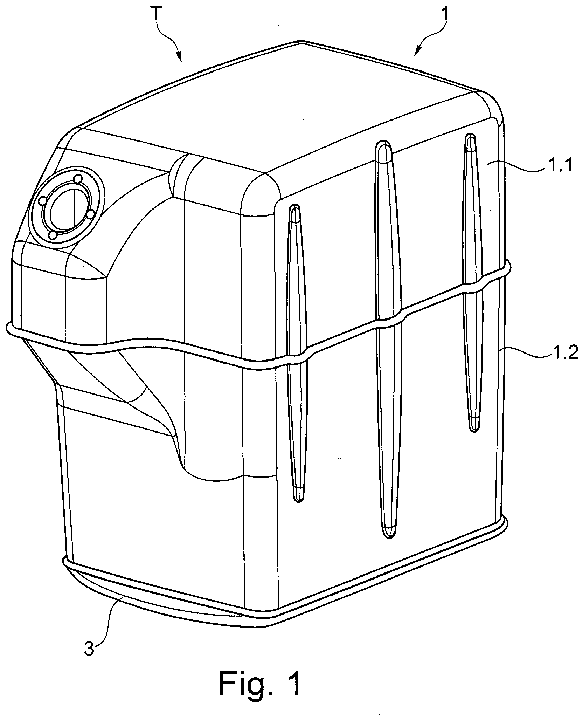

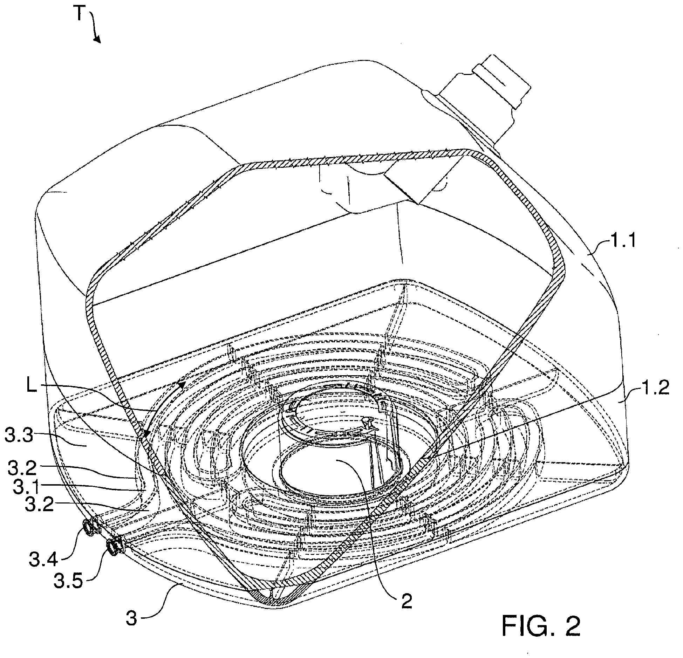

Figur 1 zeigt eine perspektivische Ansicht eines Reduktionsmitteltanks T für ein Reduktionsmittel, insbesondere einen Harnstofftank für eine vorzugsweise wässrige Harnstofflösung, z. B. sogenanntem AdBlue. Figur 2 zeigt eine andere perspektivische Ansicht des Reduktionsmitteltanks T der Figur 1 mit einer illustrativen Weglassung, so dass zu Illustrationszwecken in den Reduktionsmitteltank T hineingeschaut werden kann.

Unter Bezugnahme auf die Figuren 1 und 2 umfasst der Reduktionsmitteltank T ein Gehäuse 1 aus zwei aneinander montierten Gehäuseabschnitten 1.1 und 1.2 zur Aufnahme des Reduktionsmittels, ein Fördermodul 2 zum Fördern des Reduktionsmittels und ein unter dem Gehäuse 1 angeordnetes Tanksegment 3. Der Reduktionsmitteltank T dient zur Montage an ein Kraftfahrzeug, vorzugsweise ein Nutzfahrzeug, insbesondere ein Lastkraftwagen oder einen Omnibus.

Das Tanksegment 3 ist mit einem integrierten Fluidkanal 3.1 zum Führen eines Fluids zum Erwärmen des Reduktionsmittels versehen, so dass das Tanksegment 3 selbst den Fluidkanal 3.1 ausbildet. Das Tanksegment 3 und der Fluidkanal 3.1 werden somit durch ein und dasselbe Formteil, vorzugsweise ein Spritzgussteil ausgebildet. Das Tanksegment 3 wird in seiner Herstellung so ausgeführt, dass der Fluidkanal 3.1 mit integriert wird, insbesondere mit ausgeformt wird, z. B. ein- oder angeformt wird.

Das Tanksegment 3 umfasst eine flächenförmige, zweckmäßig haubenförmige Wandung 3.3, an deren Innenseite der Fluidkanal 3.1 ausgebildet ist. Die flächenförmige Wandung 3.3 bildet zweckmäßig eine untere Abschlussabdeckung für das Gehäuse 1.

Das Tanksegment 3 bildet eine Begrenzungsstruktur 3.2 für den Fluidkanal 3.1. Die Begrenzungsstruktur 3.2 begrenzt den Fluidkanal 3.1 entlang seiner Längserstreckung L. Die Begrenzungsstruktur 3.2 umfasst zwei im Wesentlichen parallel verlaufende Wandelemente 3.2 und einen innenseitigen Teil der flächenförmigen Wandung 3.3. Die zwei Wandelemente 3.2 begrenzen den Fluidkanal 3.1 seitlich. Die flächenförmige Wandung 3.3 begrenzt den Fluidkanal 3.1 nach unten.

Das Tanksegment 3, insbesondere die Begrenzungsstruktur 3.2 und 3.3, lässt den Fluidkanal 3.1 zu einer Seite hin offen, nämlich in Figur 2 zur Oberseite hin. Die offene Seite, also in Figur 2 die Oberseite, und somit der Fluidkanal 3.1 wird im Montagezustand des Reduktionsmitteltanks T durch ein benachbartes Tankelement geschlossen, nämlich in Figur 2 durch ein Bodensegment, zweckmäßig eine Bodenplatte, des Gehäuses 1.

Das Tanksegment 3 umfasst ferner eine Aufnahmeöffnung für das Fördermodul 2 zum Fördern des Reduktionsmittels, so dass das Fördermodul 2 zweckmäßig in das Tanksegment 3 integriert ist. Der Fluidkanal 3.1 erstreckt sich zumindest abschnittsweise im Wesentlichen kreisbogenförmig und mäanderförmig um die Aufnahmeöffnung und somit um das Fördermodul 2.

Das Tanksegment 3 umfasst einen Fluidkanal-Einlass 3.4 und einen Fluidkanal-Auslass 3.5.

Der Fluidkanal 3.1 dient zur Verbindung mit einer Leitung für Kühlfluid zum Kühlen einer Verbrennungskraftmaschine (z. B. einem Verbrennungsmotor, Ottomotor, etc.) eines Kraftfahrzeugs.-Aus den Figuren 1 und 2 wird ersichtlich, dass das Tanksegment 3 als Bodenabdeckung und zugleich als Bodenheizung für das Gehäuse 1 und somit das Reduktionsmittel dient.

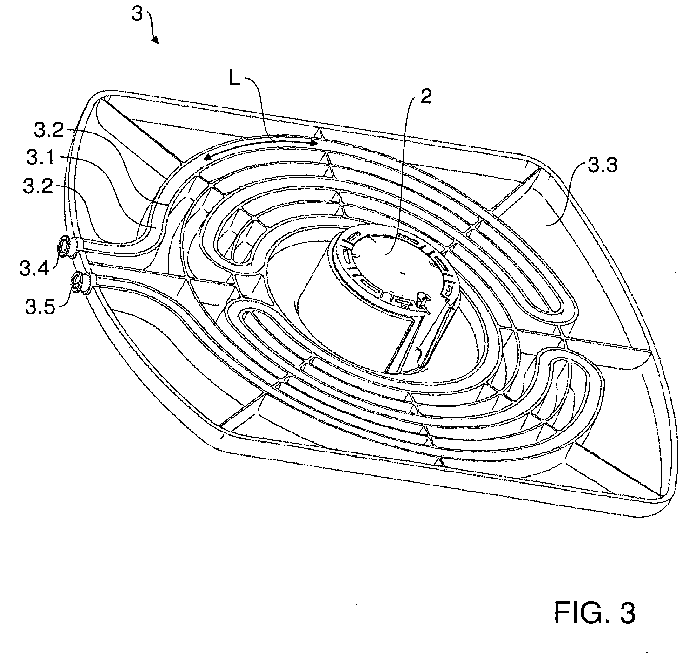

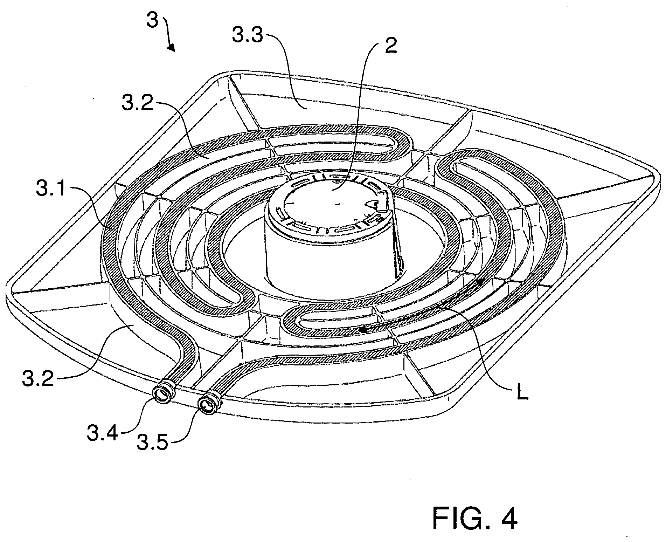

Die Figuren 3 und 4 zeigen unterschiedliche perspektivische Ansichten eines Tanksegments 3 gemäß einer Ausführungsform der Erfindung, das identisch zu dem Tanksegment 3 der Figuren 1 und 2 ausgeführt ist.

Aus den Figuren 3 und 4 wird insbesondere nochmals ersichtlich, dass das Tanksegment 3 mit einem integrierten Fluidkanal 3.1 versehen ist und das Tanksegment 3 einschließlich des Fluidkanals 3.1 durch ein und dasselbe Formteil ausgebildet wird. Der Fluidkanal 3.1 ist somit zweckmäßig einstückig-integraler Teil des Tanksegments 3.

Der Fluidkanal 3.1 ist auf der Innenseite der flächenförmigen Wandung 3.3 ausgebildet und wird im Montagezustand des Reduktionsmitteltanks 3 entlang seiner Längserstreckung L unten durch einen Teil der flächenförmigen Wandung 3.3, seitlich durch die zwei im Wesentlichen parallel verlaufenden Wandelemente 3.2 und oben durch ein Bodensegment des Gehäuses 1 begrenzt. Der Fluidkanal 3.1 verläuft bogen- und mäanderförmig um die Aufnahmeöffnung für das Fördermodul 2.
Das Tanksegment 3 umfasst ferner mehrere Versteifungsrippen, insbesondere zur Aussteifung der flächenförmigen Wandung 3.3

### Bezugszeichenliste

- T: Reduktionsmitteltank, insbesondere Harnstofftank
- 1: Gehäuse
- 1.1: Gehäuseabschnitt
- 1.2: Gehäuseabschnitt
- 2: Fördermodul zum Fördern des Reduktionsmittels
- 3: Tanksegment
- 3.1: Fluidkanal, insbesondere Heizkanal zum Führen eines Fluides zum Erwärmen des Reduktionsmittels
- 3.2: Begrenzungsstruktur für den Fluidkanal, insbesondere seitliche Begrenzungsstruktur
- 3.3: Hauben- und/oder flächenförmige Wandung
- L: Längserstreckung, insbesondere Längsrichtung, des Fluidkanals

## Patentansprüche

1. Reduktionsmitteltank (T) für ein Reduktionsmittel und vorzugsweise zur Montage an ein Kraftfahrzeug, mit einem Gehäuse (1) zur Aufnahme des Reduktionsmittels, einem Tanksegment (3) und vorzugsweise einem Fördermodul (2) zum Fördern des Reduktionsmittels, wobei das Tanksegment (3) zumindest einen integrierten Fluidkanal (3.1) zum Führen eines Fluids zum Erwärmen des Reduktionsmittels aufweist, insbesondere so, dass das Tanksegment (3) selbst den Fluidkanal (3.1) ausbildet, wobei ein Formteil das Tanksegment (3) ausbildet, und wobei das Tanksegment (3) und/oder das Formteil ein Spritzgussteil sind, **dadurch gekennzeichnet, dass** ein und dasselbe Formteil das Tanksegment (3) und den durch parallel verlaufende Wandelemente (3.2) und einen Teil einer hauben- und/oder flächenförmigen Wandung (3.3) begrenzten Fluidkanal (3.1) ausbildet.

2. Reduktionsmitteltank (T) nach einem der vorhergehenden Ansprüche, **dadurch gekennzeichnet, dass** der Fluidkanal (3.1) auf einer Innenseite des Tanksegments (3) ausgebildet ist.

3. Reduktionsmitteltank (T) nach einem der vorhergehenden Ansprüche, **dadurch gekennzeichnet, dass** das Tanksegment (3) das Fördermodul (2) aufweist und/oder eine Aufnahmeöffnung für das Fördermodul (2) aufweist.

4. Reduktionsmitteltank (T) nach einem der vorhergehenden Ansprüche, **dadurch gekennzeichnet, dass** zumindest ein Fluidkanal (3.1) zumindest abschnittsweise bogenförmig um die Aufnahmeöffnung für das Fördermodul (2) und/oder mäanderförmig verläuft.

5. Reduktionsmitteltank (T) nach einem der vorhergehenden Ansprüche, **dadurch gekennzeichnet, dass** das Tanksegment (3) die hauben- und/oder flächenförmige Wandung (3.3) umfasst und die Wandung (3.3) eine vorzugsweise untere Abschlussabdeckung für das Gehäuse (1) bildet.

6. Reduktionsmitteltank (T) nach einem der vorhergehenden Ansprüche, **dadurch gekennzeichnet, dass** der Fluidkanal (3.1) mittels einer durch das Tanksegment (3) gebildeten Begrenzungsstruktur (3.2) entlang seiner Längserstreckung (L) begrenzt wird und die Begrenzungsstruktur (3.2) zumindest zwei parallel verlaufende Wandelemente (3.2) und einen innenseitigen Teil der hauben- und/oder flächenförmigen Wandung (3.3) umfasst.

7. Reduktionsmitteltank (T) nach einem der vorhergehenden Ansprüche, **dadurch gekennzeichnet, dass** das Tanksegment (3) und/oder die Begrenzungsstruktur (3.2) den Fluidkanal (3.1) zu einer Seite hin offen lässt und die Seite und somit der Fluidkanal (3.1) durch ein benachbartes Tankelement geschlossen wird.

8. Reduktionsmitteltank (T) nach einem der vorhergehenden Ansprüche, **dadurch gekennzeichnet, dass** das Tanksegment (3) und/oder die Begrenzungsstruktur (3.2) den Fluidkanal (3.1) zur Oberseite hin offen lässt und die Oberseite durch ein aufgesetztes Tankelement, insbesondere ein Bodensegment des Gehäuses (1), geschlossen wird.

9. Reduktionsmitteltank (T) nach einem der vorhergehenden Ansprüche, **dadurch gekennzeichnet, dass** das Tanksegment (3) unter einem Bodensegment des Gehäuses (1) angeordnet ist und/oder als Bodenheizung für das Gehäuse (1) und somit das Reduktionsmittel dient.

10. Reduktionsmitteltank (T) nach einem der vorhergehenden Ansprüche, **dadurch gekennzeichnet, dass** der Fluidkanal (3.1) mit einem Kühlkreislauf einer Verbrennungskraftmaschine des Kraftfahrzeugs verbindbar ist.

11. Kraftfahrzeug, vorzugsweise Nutzfahrzeug, mit einem Reduktionsmitteltank (T) nach einem der Ansprüche 1 bis 10.

## Claims

1. Reducing agent tank (T) for a reducing agent and preferably for installation on a motor vehicle, having a housing (1) for accommodating the reducing agent, having a tank segment (3), and preferably having a delivery module (2) for delivering the reducing agent, wherein the tank segment (3) has at least one integrated fluid duct (3.1) for conducting a fluid for warming the reducing agent, in particular in such a way that the tank segment (3) itself forms the fluid duct (3.1), wherein a moulded part forms the tank segment (3), and wherein the tank segment (3) and/or the moulded part are one injection-moulded part, **characterized in that** one and the same moulded part forms the tank segment (3) and the fluid duct (3.1) delimited by parallel-running wall elements (3.2) and by a part of a lid-like and/or surface-like wall (3.3).

2. Reducing agent tank (T) according to one of the preceding claims, **characterized in that** the fluid duct (3.1) is formed on an inner side of the tank segment (3).

3. Reducing agent tank (T) according to one of the preceding claims, **characterized in that** the tank segment (3) has the delivery module (2) and/or has a receiving opening for the delivery module (2).

4. Reducing agent tank (T) according to one of the preceding claims, **characterized in that** at least one fluid duct (3.1) runs, at least in sections, in arcuate fashion around the receiving opening for the delivery module (2) and/or in meandering fashion.

5. Reducing agent tank (T) according to one of the preceding claims, **characterized in that** the tank segment (3) comprises the lid-like and/or surface-like wall (3.3), and the wall (3.3) forms a preferably lower terminating cover for the housing (1).

6. Reducing agent tank (T) according to one of the preceding claims, **characterized in that** the fluid duct (3.1) is delimited along its longitudinal extent (L) by way of a delimiting structure (3.2) formed by the tank segment (3), and the delimiting structure (3.2) comprises at least two parallel-running wall elements (3.2) and an inner part of the lid-like and/or surface-like wall (3.3) .

7. Reducing agent tank (T) according to one of the preceding claims, **characterized in that** the tank segment (3) and/or the delimiting structure (3.2) leaves the fluid duct (3.1) open to one side, and the side, and thus the fluid duct (3.1), are closed by an adjacent tank element.

8. Reducing agent tank (T) according to one of the preceding claims, **characterized in that** the tank segment (3) and/or the delimiting structure (3.2) leaves the fluid duct (3.1) open toward the top side, and the top side is closed by a tank element placed thereon, in particular by a base segment of the housing (1).

9. Reducing agent tank (T) according to one of the preceding claims, **characterized in that** the tank segment (3) is arranged under a base segment of the housing (1) and/or serves as a base heater for the housing (1) and thus for the reducing agent.

10. Reducing agent tank (T) according to one of the preceding claims, **characterized in that** the fluid duct (3.1) is connectable to a cooling circuit of an internal combustion engine of the motor vehicle.

11. Motor vehicle, preferably utility vehicle, having a reducing agent tank (T) according to one of Claims 1 to 10.

## Revendications

1. Réservoir d'agent réducteur (T) pour un agent réducteur et de préférence à monter sur un véhicule, avec une enceinte (1) destinée à contenir l'agent réducteur, un segment de réservoir (3) et de préférence un module de transport (2) pour le transport de l'agent réducteur, dans lequel le segment de réservoir (3) présente au moins un canal de fluide intégré (3.1) pour la conduite d'un fluide destiné à chauffer l'agent réducteur, en particulier de telle manière que le segment de réservoir (3) forme lui-même le canal de fluide (3.1), dans lequel une pièce moulée forme le segment de réservoir (3), et dans lequel le segment de réservoir (3) et/ou la pièce moulée sont une pièce moulée par injection, **caractérisé en ce qu'**une seule et même pièce moulée forme le segment de réservoir (3) et le canal de fluide (3.1) limité par des éléments de paroi (3.2) s'étendant parallèlement et une partie d'une paroi (3.3) en forme de hotte et/ou en forme de plaque.

2. Réservoir d'agent réducteur (T) selon une des revendications précédentes, **caractérisé en ce que** le canal de fluide (3.1) est formé sur un côté intérieur du segment de réservoir (3).

3. Réservoir d'agent réducteur (T) selon une des revendications précédentes, **caractérisé en ce que** le segment de réservoir (3) présente le module de transport (2) et/ou présente une ouverture de réception pour le module de transport (2).

4. Réservoir d'agent réducteur (T) selon une des revendications précédentes, **caractérisé en ce qu'**au moins un canal de fluide (3.1) s'étend au moins en partie en forme d'arc autour de l'ouverture de réception pour le module de transport (2) et/ou sous forme sinueuse.

5. Réservoir d'agent réducteur (T) selon une des revendications précédentes, **caractérisé en ce que** le segment de réservoir (3) comprend la paroi en forme de hotte et/ou de plaque (3.3) et la paroi (3.3) forme un recouvrement d'extrémité de préférence inférieur pour l'enceinte (1).

6. Réservoir d'agent réducteur (T) selon une des revendications précédentes, **caractérisé en ce que** le canal de fluide (3.1) est limité le long de son extension longitudinale (L) au moyen d'une structure de limitation (3.2) formée par le segment de réservoir (3) et la structure de limitation (3.2) comprend au moins deux éléments de paroi s'étendant parallèlement (3.2) et une partie intérieure de la paroi en forme de hotte et/ou de plaque (3.3).

7. Réservoir d'agent réducteur (T) selon une des revendications précédentes, **caractérisé en ce que** le segment de réservoir (3) et/ou la structure de limitation (3.2) laisse(nt) le canal de fluide (3.1) ouvert vers un côté et le côté et dès lors le canal de fluide (3.1) est fermé par un élément de réservoir voisin.

8. Réservoir d'agent réducteur (T) selon une des revendications précédentes, **caractérisé en ce que** le segment de réservoir (3) et/ou la structure de limitation (3.2) laisse(nt) le canal de fluide (3.1) ouvert vers le côté supérieur et le côté supérieur est fermé par un élément de réservoir superposé, en particulier par un segment de fond de l'enceinte (1).

9. Réservoir d'agent réducteur (T) selon une des revendications précédentes, **caractérisé en ce que** le segment de réservoir (3) est disposé en dessous d'un segment de fond de l'enceinte (1) et/ou fait office de chauffage de fond pour l'enceinte (1) et dès lors pour l'agent réducteur.

10. Réservoir d'agent réducteur (T) selon une des revendications précédentes, **caractérisé en ce que** le canal de fluide (3.1) peut être raccordé à un circuit de refroidissement d'un moteur à combustion interne du véhicule à moteur.

11. Véhicule à moteur, en particulier véhicule utilitaire, muni d'un réservoir d'agent réducteur (T) selon une des revendications 1 à 10.
